# NEUE EUROPÄISCHE PATENTSCHRIFT

(11) **EP 2 395 171 B2**
(45) Veröffentlichungstag und Bekanntmachung des Hinweises auf die Entscheidung über den Einspruch: **28.06.2023**
(45) Hinweis auf die Patenterteilung: 07.09.2016
(21) Anmeldenummer: 11168758.8
(22) Anmeldetag: 06.06.2011
(51) Int. Cl.: E04C 2/04, B32B 7/02, B32B 13/00

(54) **Bauplatte sowie Verfahren und Vorrichtung zur Herstellung der Bauplatte**
Construction board and method and device for manufacturing a construction board
Panneau de construction ainsi que procédé et dispositif de fabrication d'un panneau de construction

(30) Priorität: 14.06.2010 DE 102010023726
(43) Veröffentlichungstag der Anmeldung: 14.12.2011
(73) Patentinhaber: Xella Baustoffe GmbH, 47259 Duisburg (DE)
(72) Erfinder: Kochan, Jörg, 06333 Wiederstedt (DE); Schweiger, Hans-Peter, 92533 Wernberg (DE); Naumann, Roger, 63825 Westerngrund (DE)
(74) Vertreter: Dr. Solf & Zapf Patent- und Rechtsanwalts PartG mbB

(56) Entgegenhaltungen:
- EP-A1- 1 685 932
- BE-A1- 891 433
- CA-A1- 2 064 414
- DD-A1- 206 407
- DE-A1- 1 759 417
- DE-A1- 1 942 226

## Beschreibung

Die Erfindung betrifft ein Verfahren zur Herstellung einer mineralischen monolithischen mehrschichtigen wärmedämmenden sandwichartigen Bauplatte aus Porenbeton sowie eine Vorrichtung zur Herstellung der Bauplatte bzw. zur Durchführung des Verfahrens.

Porenbeton im Sinne der Erfindung ist ein mineralisches porosiertes hydrothermal gehärtetes Produkt mit einer Mikroporen aufweisenden Steggerüststruktur, die Makroporen der Porosierung umgibt. Die Makroporen sind entweder aus einem während der Herstellung stattfindenden Gärprozess entstandene Treibporen oder aus einem während der Herstellung zugemischten Schaum entstandene Poren. Im letzteren Fall wird das Produkt auch als Schaumbeton bezeichnet.

Monolithisch im Sinne der Erfindung meint, dass die Schichten der Bauplatte ohne Verbindungsmittel - wie z. B. Verschraubungen oder Verklebungen mittels Klebstoff - aneinander haften.

Bekannt ist aus der DD 206 407 A1 eine monolithische mineralische mehrschichtige Außenwandplatte, die aus mindestens zwei innig miteinander verwachsenen Schichten aus Silikatbetonen mindestens zweier unterschiedlicher Baustoffgemische mit kalk- und kieselsäurehaltigen Hauptbestandteilen mit unterschiedlicher Konsistenz und unterschiedlichem Verdichtungszustand der Rohgemische und unterschiedlichen Trockenrohdichten und Würfeldruckfestigkeiten der frisch auf frisch betonierten und gemeinsam unter Dampfdruck gehärteten Silikonbetone besteht. Eine Porosierung erfolgte bei der Herstellung der Außenwandplatte nicht. Eine der Schichten ist eine Trag- und Wetterschutzschicht aus dichtem Silikatbeton mit einer Trockenrohdichte zwischen 1800 und 2100 kg/m³ und die andere Schicht soll eine Wärmedämmschicht sein mit einer Trockenrohdichte zwischen 300 und 700 kg/m³.

Aus der DE 36 42 772 A1 ist ein Verfahren zur Herstellung einer mineralischen Lärmschutzplatte bekannt, bei dem in eine auf einem Rütteltisch lagernde Gießform aus Metall an je eine Innenfläche der Gießform eine Lärm absorbierende haufwerksporige ausgehärtete Leichtbetonplatte angelegt wird und anschließend in den Innenraum zwischen den Leichtbetonplatten Normalbeton unter Rütteln der Gießform eingefüllt wird. Ein ähnliches Verfahren ist aus der DE 198 07 914 A1 bekannt. In beiden Fällen soll sich der Leichtbeton beim Aushärten mit den Deckschichten verbinden, woraus eine monolithische mineralische Bauplatte resultiert.

Die DE 19 42 226 A1 beschreibt ein Verfahren zur Herstellung eines Sandwichelements, wobei zunächst Leichtteil-Platten aus Holz oder Papier oder Kieselgur oder hochporöser Zellplastik oder Mineralwolle oder dergleichen hergestellt und in einer Gießform in bestimmtem Abstand voneinander angebracht werden, wonach eine Porenbeton bildende Masse in den Zwischenraum gegossen, porosieren und abbinden gelassen wird und anschließend das Sandwichelement autoklaviert wird.

Die BE 891 433 offenbart einen Isolierblock mit mindestens zwei miteinander fest verbundenen Materialschichten. Eine erste Schicht besteht aus Porenbeton und gewährleistet eine Trag- und Isolierfunktion. Eine zweite Schicht weist keine Tragfunktion auf und besteht aus einem anorganischen isolierenden Material, um die Isolierung durch die Porenbetonschicht zu verstärken.

Weiterhin offenbart BE 891 433 eine oben offene Gießform mit einem Boden, Seitenwandungen und Stirnwandungen. Der Gießform enthält Haltemittel zur Halterung von hochkant auf dem Boden stehenden Porenbetonplatten. Die Haltemittel lagern auf dem oberen Rand der Gießform.

Die EP 1 685 932 A1 offenbart ein Verfahren zur Herstellung einer mehrschichtigen Leichtbauplatte mit einer Kernschicht und mit mindestens einer an einer Hauptoberfläche der Kernschicht angeordneten Deckschicht, wobei sowohl die Kernschicht als auch die Deckschicht aus einer Festmörtelmatrix aus Zementstein und mindestens einem Leichtzuschlagstoff besteht. Das Verfahren entspricht einem Betonieren "frisch auf frisch" und umfasst die Verfahrensschritte Erzeugen einer Frischbetonkernschicht durch Aufbringen von Frischbeton auf eine erste sich kontinuierlich bewegende Unterlage, Erzeugen einer Deckschicht auf einer zweiten sich kontinuierlich bewegenden Unterlage und Aufbringen der vorgefertigten Deckschicht auf die Kernschicht, Schneiden des Schichtenstrangs in einzelne Platten, Abbindenlassen der Platten und gegebenenfalls Trocknen der Platten.

Aus der DE 1 759 417 ist eine großformatige, mehrschichtige, massive Fertigteil-Leichtbauplatte mit einem Mittelteil und zwei massiven Außenteilen bekannt. Das Mittelteil und die massiven Außenteile bestehen aus atmungsaktiven Materialien, wobei die Poren und Fasern des Mittelteiles mit den massiven Außenteilen eine mechanisch unlösbare Verbindung eingehen. Dabei besteht das Mittelteil aus einer gebundenen Holzwollefaserplatte und die massiven Außenteile bestehen z.B. aus Porenbeton. Die Leichtbauplatte kann in einem Arbeitsgang in Batterieschalung hergestellt werden.

Aufgabe der Erfindung ist, ein Verfahren zur Herstellung einer monolithischen Porenbetonsandwichbauplatte bereitzustellen, wobei die Porenbetonsandwichbauplatte auf einfache Weise geschaffen wird und ausschließlich aus Porenbeton besteht und sehr gute Wärmedämmeigenschaften bei guter Druck- und Biegefestigkeit aufweist.

Zudem ist es Aufgabe der Erfindung, eine Gießform zur Herstellung einer derartigen Bauplatte bereitzustellen.

Diese Aufgaben werden durch die Merkmale der Ansprüche 1 und 7 gelöst. Vorteilhafte Weiterbildungen der Erfindung werden in den Unteransprüchen gekennzeichnet. Anhand der Zeichnung wird die Erfindung im Folgenden beispielhaft näher erläutert. Es zeigen:
- Fig. 1: perspektivisch und schematisch eine mit dem erfindungsgemäßen Verfahren hergestellte Bauplatte;
- Fig. 2: perspektivisch und schematisch eine Gießform - teilweise angeschnitten - zur Herstellung einer Bauplatte mit dem erfindungsgemäßen Verfahren;
- Fig. 3: die Gießform gemäß Fig. 2 mit eingefüllter Porenbetonfrischmasse.

Eine mit dem erfindungsgemäßen Verfahren herstellbare Bauplatte 1 weist mindestens zwei auf Abstand voneinander angeordnete äußere Porenbetonplatten 3, 4 und zwischen den beiden äußeren Porenbetonplatten 3, 4 eine innere Porenbetonplatte 2 auf, wobei die Platten 3, 4 und 2 an ihren Grenzzonen 5 mineralisch und mechanisch miteinander durch mineralische Calciumsilikathydratphasenverwachsungen und mechanischen Masseverkrallungen von Porenbetonmaterial in den Makroporen miteinander verbunden sind.

Die Bauplatte 1 hat zum Beispiel folgende Abmessungen in cm:
Länge: zwischen 30 und 800, insbesondere zwischen 50 und 63 cm
Dicke: zwischen 25 und 75, insbesondere zwischen 30 und 48 cm
Höhe: zwischen 15 und 80, insbesondere zwischen 20 und 25 cm

Die Wärmeleitfähigkeit der Bauplatte 1 liegt vorzugsweise z. B. zwischen 0,05 und 0,12, insbesondere zwischen 0,06 und 0,08 W/mK.

Die äußeren Porenbetonplatten 3, 4 können gleich dick sein. Vorzugsweise sind sie jedoch unterschiedlich dick, wobei die Dicke z. B. außen zwischen 2 und 6 und innen zwischen 15 und 36,5 cm liegt.

Die Rohdichte der äußeren Porenbetonplatten 3, 4 kann unterschiedlich sein. Vorzugsweise sind die Rohdichten jedoch gleich. Erfindungsgemäß liegen die Rohdichten der äußeren Porenbetonplatten 3, 4 zwischen 250 und 800, insbesondere zwischen 350 und 650 kg/m³.

Die Druckfestigkeit der äußeren Porenbetonplatten 3, 4 kann unterschiedlich sein. Vorzugsweise sind sie jedoch gleich und liegen z. B. zwischen 1,6 und 8, insbesondere zwischen 2 und 6 N/mm².

Die Wärmeleitfähigkeit der äußeren Porenbetonplatten 3, 4 kann unterschiedlich sein. Vorzugsweise ist die Wärmeleitfähigkeit jedoch gleich und liegt zwischen 0,07 und 0,15, insbesondere zwischen 0,09 und 0,13 W/mK.

Die innere Porenbetonplatte 2 weist erfindungsgemäß eine geringere Rohdichte als die äußeren Porenbetonplatten 3, 4 auf. Die Rohdichte der inneren Porenbetonplatte 2 liegt zwischen 70 und 150, insbesondere zwischen 100 und 120 kg/m³, wobei die Druckfestigkeit auch geringer ist als die Druckfestigkeit der äußeren Porenbetonplatten 3, 4. Die Druckfestigkeit liegt z. B. zwischen 0,2 und 1,0, insbesondere zwischen 0,30 und 0,40 N/mm². Die Dicke liegt vorzugsweise zwischen 6 und 30, insbesondere zwischen 8 und 14 cm und die Wärmeleitfähigkeit vorzugsweise z. B. zwischen 0,038 und 0,065, insbesondere zwischen 0,04 und 0,05 W/mK.

Vorzugsweise fluchten die Außenkanten der Porenbetonplatten 2, 3, 4 miteinander, so dass keine der Platten 2, 3, 4 nach außen vorsteht. Es liegt im Rahmen der Erfindung, während der Herstellung oder nach der Herstellung der Bauplatte 1 Stufenfalze oder Nuten im Randbereich der Platte 1 vorzusehen.

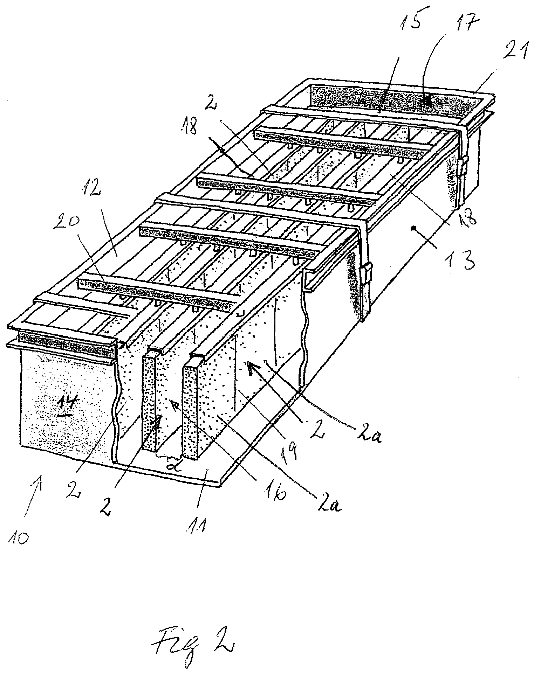

Bei dem erfindungsgemäßen Verfahren zur Herstellung der Porenbetonplatte 1 wird eine vorzugsweise demontierbare, quaderförmige, oben offene Gießform 10 z. B. aus Metall verwendet, die einen Boden 11, zwei Seitenwandungen 12, 13 und zwei Stirnwandungen 14, 15 z. B. gemäß Fig. 2 aufweist. In die Gießform 10 werden mindestens zwei gehärtete innere Porenbetonplatten 2 hochkant auf Abstand "d" auf den Boden gestellt. Der Abstand beträgt z. B. die doppelte Dicke einer inneren Porenbetonplatte 2, insbesondere das 1,2-bis 3-fache der Dicke einer inneren Porenbetonplatte 2.

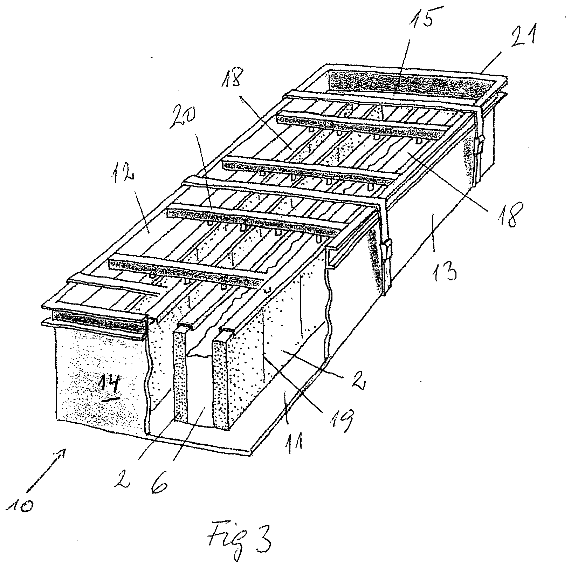

Die Gießform 10 ist zweckmäßigerweise so dimensioniert, dass mehr als zwei innere Porenbetonplatten 2 aufgenommen werden können. Die Fig. 2 zeigt als Beispiel die Aufstellung von vier inneren Porenbetonplatten 2, die jeweils aus mehreren, hintereinander angeordneten Teilplatten 2a bestehen können. Zwischen zwei inneren Porenbetonplatten 2 ist ein Zwischenraum 16 gebildet, in den eine Porenbetonfrischmasse 6 für die äußeren Porenbetonplatten 3, 4 eingegossen wird. Diese Zwischenstufe des Verfahrens zeigt Fig. 3.

Die Erfindung sieht Haltemittel mit einem von der Gießform abnehmbaren Halterahmen 21 für die Lagerung bzw. Fixierung der inneren Porenbetonplatten 2 in der Gießform 10 vor, damit die Platten 2 nicht umfallen beim Transport der Gießform und/oder beim Gießen von Porenbetonfrischmasse 6 und insbesondere nicht Aufschwimmen beim Gießen. Die Haltemittel weisen sich zwischen den Stirnwandungen 14, 15 im Öffnungsbereich 17 der Gießform 10 erstreckende Halteschienen 18, z. B. aus Metall auf, die z. B. im Querschnitt U-förmig sind und jeweils mit ihren U-Schenkeln die öffnungsseitige Längsseite einer inneren Porenbetonplatte 2 z. B. formschlüssig umgreifen. An den Halteschienen 18 sind so genannte Stechlanzen 19 angeordnet, die sich von einer Halteschiene 18 zum Boden 11 der Gießform 10 hin erstrecken und jeweils die hochkant gestellten inneren relativ mürben Porenbetonplatten 2 durchgreifen. Die Stechlanzen 19 sind zweckmäßigerweise so steif, dass sie durch das Porenbetonmaterial der inneren Porenbetonplatten 2 gestochen werden können.

Die Halteschienen 18 sind an zu diesen sich quer erstreckenden Tragschienen 20 auf Abstand voneinander gehalten angeordnet, wobei die Tragschienen 20 im Bereich des öffnungsseitigen Randes der Gießform 10 zumindest auf den Gießformseitenwandungen 12, 13 abgestützt sind. Vorzugsweise sind die Halteschienen 18 seitlich versetzbar an den Tragschienen 20 angeordnet, so dass der Abstand "d" zwischen zwei inneren Porenbetonplatten 2 verändert werden kann.

Wenn in den Zwischenraum 16 zwischen zwei inneren Porenbetonplatten 2 und den Stirnwandungen 14, 15, die diesen Zwischenraum stirnseitig begrenzen, frisch angemachter Schaumbeton eingegossen wird, wird z. B. bis zur vollen Höhe der inneren Porenbetonplatten 2 gegossen. Man lässt in diesem Fall die Masse ansteifen.

Wenn eine Treibporenbildner aufweisende Porenbetonmasse eingegossen wird, wird der Zwischenraum 16 nicht voll ausgefüllt (Fig. 3). Man lässt in diesem Fall die Masse auftreiben und ansteifen.

Die Halteschienen 18 und die Tragschienen 20 sind an dem rechteckigen Rahmen 21 angeordnet, der abnehmbar mit dem öffnungsseitigen oberen Rand der Gießform 10 in Verbindung steht.

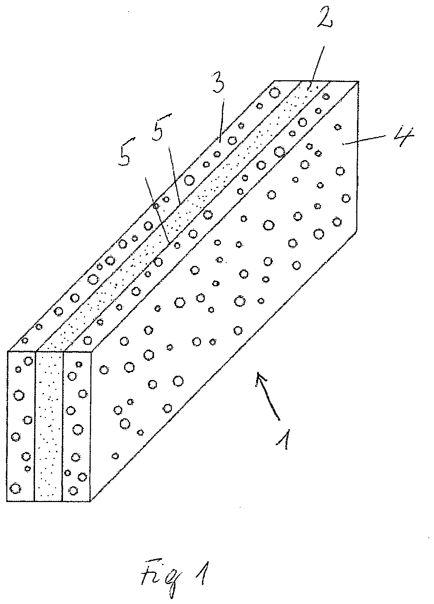

Die Gießform 10 und die Haltemittel werden vor dem Autoklavieren entfernt und der so entschalte ggf. noch auf dem Boden 11 stehende Bauplattenrohling mit der angesteiften Masse in den Autoklaven zur hydrothermalen Härtung verfrachtet. Dabei kann es zweckmäßig sein, die Oberfläche des Porenbetonrohlings zu bearbeiten, z. B. zu glätten. Erfindungsgemäß wird der Rohling in mehrere Bauplattenrohlinge durch Längssägen durch die angesteifte Porenbetonfrischmasse 6 aufgeteilt, woraus vier in Fig. 1 dargestellte Bauplatten 1 resultieren, wenn die in Fig. 2 und 3 abgebildete Gießform verwendet wird.

Ein besonderer Vorteil der erfindungsgemäßen Anordnung von autoklavierten Platten 2 und frischer, angesteifter Porenbetonmasse für die Platten 3 und 4 liegt darin, dass beide Massen mit Drähten oder Messerleisten gemeinsam geschnitten werden können, weil die Platten 2 entsprechend mürbe sind. Damit können übliche Porenbetonsägen zum Quer- und/oder Längsschneiden mit stehenden oder bewegten Drähten oder Messerleisten zum Schneiden der grünen Masse und autoklavierten Masse (Platten 2) verwendet werden.

Erfindungsgemäß erfolgt eine derartige Aufteilung vor der Autoklavreise, d.h. ein Sägen in Querrichtung erfolgt vor dem Autoklavieren.

Mit der Erfindung gelingt es auf einfache Weise eine handhabungsfeste Bauplatte aus Porenbeton zur Verfügung zu stellen, deren äußere Oberflächenschichten (Platten 3, 4) ausreichende Festigkeiten für das Handling gewährleisten, während die relativ mürbe Innenschicht (innere Platte 2) eine geringere Wärmeleitfähigkeit gewährleistet.

Mit der Erfindung wird eine überraschend hohe Verbundkraft der Platten 3, 4 und 2 untereinander an den Grenzzonen 5 erzeugt. Dies ergibt sich sehr wahrscheinlich daraus, dass während des Gießens der Porenbetonfrischmasse für die äußeren Porenbetonplatten 3, 4 Material der Frischmasse, insbesondere in die Makroporen der inneren Porenbetonplatte 2 eindringen kann und im Autoklavprozess auch dort Calciumsilikathydratphasenbildung erfolgt, die zu einer mechanischen Verkrallung sowie einer zusätzlichen mineralischen Verwachsung der Platten miteinander in dieser Übergangszone 5 führt.

Die mit dem erfindungsgemäßen Verfahren hergestellte Bauplatte wird z. B. verwendet als Mauerstein für Außenwände oder als maschinenversetzbare großformatige Wandplatte.

Es liegt im Rahmen der Erfindung, mindestens eine der äußeren Porenbetonplatten 3, 4 zu bewehren, insbesondere mit einer sogenannten Transportbewehrung, wobei letzteres den zerstörungsfreien Transport und/oder Montage insbesondere großformatiger Bauplatten ermöglicht.

## Patentansprüche

1. Verfahren zur Herstellung einer mineralischen monolithischen mehrschichtigen wärmedämmenden Bauplatte (1) aus Porenbeton aufweisend mindestens drei Schichten, wovon zwei äußere Schichten (3, 4) aus Porenbeton und die innere Schicht (2) aus einem Wärmedämmmaterial besteht, wobei
a) die innere Schicht (2) auch aus Porenbeton besteht,
b) die Rohdichte der inneren Porenbetonschicht (2) geringer ist als die Rohdichte der äußeren Porenbetonschichten (3, 4),
c) die Schichten jeweils in einer Grenzzone (5) untereinander durch eine Calciumsilikathydratphasenverwachsungsbindung und eine mechanische Porenbetonmaterialverkrallungsverbindung in Verbindung stehen,
d) die mechanische Materialverkrallung aus in Makroporen der Grenzzonen (5) der inneren Schicht (2) eingreifendem Porenbetonmaterial der äußeren Schichten (3, 4) resultiert,
e) die äußeren Schichten (3, 4) mit Rohdichten zwischen 250 und 800 kg/m³ hergestellt werden,
und
- wobei mindestens zwei ausgehärtete Porenbetonplatten aus einem Porenbetonmaterial mit Rohdichten zwischen 70 und 150 kg/m³ für die innere Schicht (2) der Bauplatte (1) in einer quaderförmigen oben offenen, einen Boden (11), zwei Seitenwandungen (12, 13) und zwei Stirnwandungen (14, 15) aufweisenden Gießform (10) auf Abstand nebeneinander und im Abstand jeweils von der benachbarten Seitenwand (12, 13) der Gießform (10) auf den Boden (11) der Gießform (10) hochkant aufgestellt werden, danach Porenbetongießmasse (6) für die äußeren Schichten (3, 4) in den Zwischenraum (16) der Porenbetonplatten und jeweils in den Zwischenraum zwischen der Porenbetonplatte und der Seitenwand (12, 13) der Gießform (10) eingefüllt wird, anschließend nach dem Gären und Ansteifen der Gießmasse (6) und nach einem Entschalen der Porenbetonformkörper in einen Autoklaven gebracht und die Gießmasse (6) gehärtet wird, und
- wobei nach dem Entschalen des Porenbetonformkörpers das frische, angesteifte Porenbetonmaterial der äußeren Schichten (3, 4) im Zwischenraum (16) zwischen den Porenbetonplatten der inneren Schichten (2) mit einer üblicherweise verwendeten Porenbetonsäge mit Drähten oder Schneidleisten längs geschnitten wird, und
- wobei nach dem Entschalen mit derselben Porenbetonsäge mit stehenden oder bewegten Drähten oder Messerleisten gleichzeitig sowohl frische, angesteifte Porenbetonmasse der äußeren Schichten (3, 4) als auch die relativ mürbe, erhärtete bzw. autoklavierte Porenbetonmasse der inneren Schicht (2) bzw. Schichten (2) quer geschnitten werden,
- wobei ein Aufschwimmen der hochkant gestellten Porenbetonplatten der inneren Schicht (2) beim Gießen von Porenbetonfrischmasse verhindernde Haltemittel für die Fixierung der Porenbetonplatten der inneren Schicht (2) verwendet werden, wobei die Haltemittel auf dem oberen Rand der Gießform (10) lagern und mit Stechlanzen (19) zum Einstechen in die Porenbetonplatten ausgerüstet sind, wobei sich die Stechlanzen (19) von den Haltemitteln zum Boden (11) hin erstrecken und wobei die Haltemittel einen von der Gießform (10) abnehmbaren viereckigen Rahmen (21) aufweisen, in dem sich parallel zu den Seitenwandungen (12, 13) erstreckende Halteschienen (18) zum Halten der Porenbetonplatten vorgesehen sind, die an sich quer zu den Halteschienen (18) erstreckenden, am Rahmen (21) befestigten Tragschienen (20) angeordnet sind, wobei die Stechlanzen (19) an den Halteschienen (18) vorgesehen sind.

2. Verfahren nach Anspruch 1,
**dadurch gekennzeichnet, dass**
die äußeren Schichten (3, 4) mit Rohdichten zwischen 350 und 650 kg/m³ und/oder Wärmeleitfähigkeiten zwischen 0,07 und 0,15 W/mK, insbesondere zwischen 0,09 und 0,13 W/mK, hergestellt werden und/oder die innere Schicht (2) mit Rohdichten zwischen 100 und 120 kg/m³, und/oder Wärmeleitfähigkeiten zwischen 0,038 und 0,065 W/mK, insbesondere zwischen 0,04 und 0,05 W/mK, verwendet wird.

3. Verfahren nach Anspruch 1 und/oder 2,
**dadurch gekennzeichnet, dass**
die äußeren Schichten (3, 4) mit Druckfestigkeiten zwischen 1,6 und 8 N/mm², insbesondere zwischen 2 und 6 N/mm², hergestellt werden und/oder die innere Schicht (2) mit einer Druckfestigkeit zwischen 0,2 und 1,0 N/mm², insbesondere zwischen 0,3 und 0,4 N/mm², hergestellt wird.

4. Verfahren nach einem oder mehreren der Ansprüche 1 bis 3,
**dadurch gekennzeichnet, dass**
mindestens eine der äußeren Schichten (3, 4) bewehrt wird, insbesondere transportbewehrt wird, insbesondere bei großformatigen Bauplatten.

5. Verfahren nach einem oder mehreren der Ansprüche 1 bis 4,
**dadurch gekennzeichnet, dass**
die Bauplatte (1) mit einer Wärmeleitfähigkeit zwischen 0,05 und 0,12 W/mK, insbesondere zwischen 0,06 und 0,08 W/mK, hergestellt wird.

6. Verfahren nach einem oder mehreren der Ansprüche 1 bis 5,
**dadurch gekennzeichnet, dass**
die Bauplatte (1) mit folgenden Abmessungen hergestellt wird:
Länge: zwischen 30 und 800, insbesondere zwischen 50 und 63 cm
Dicke: zwischen 25 und 75, insbesondere zwischen 30 und 48 cm
Höhe: zwischen 15 und 80, insbesondere zwischen 20 und 25 cm.

7. Oben offene, quaderförmige Gießform (10) zur Durchführung des Verfahrens nach einem der Ansprüche 1 bis 6,
aufweisend einen Boden (11), zwei Seitenwandungen (12, 13) und zwei Stirnwandungen (14, 15) sowie Haltemittel ausgebildet zur Halterung von hochkant auf dem Boden (11) stehenden Porenbetonplatten, wobei die Haltemittel auf dem oberen Rand der Gießform (10) lagern und mit Stechlanzen (19) zum Einstechen in die Porenbetonplatten ausgerüstet sind, wobei sich die Stechlanzen (19) von den Haltemitteln zum Boden (11) hin erstrecken und wobei die Haltemittel einen von der Gießform (10) abnehmbaren viereckigen Rahmen (21) aufweisen, in dem sich parallel zu den Seitenwandungen (12, 13) erstreckende Halteschienen (18) zum Halten der Porenbetonplatten vorgesehen sind, die an sich quer zu den Halteschienen (18) erstreckenden, am Rahmen (21) befestigten Tragschienen (20) angeordnet sind, wobei die Stechlanzen (19) an den Halteschienen (18) vorgesehen sind.

8. Gießform nach Anspruch 7,
**dadurch gekennzeichnet, dass**
die Halteschienen (18) seitlich versetzbar an den Tragschienen (20) angeordnet sind.

## Claims

1. A method for producing a mineral monolithic multilayer heat-insulating construction slab (1) from aerated concrete, having at least three layers, of which two outer layers (3, 4) consist of aerated concrete and the inner layer (2) consists of a heat insulation material, wherein
a) the inner layer (2) also consists of aerated concrete,
b) the apparent density of the inner aerated concrete layer (2) is lower than the apparent density of the outer aerated concrete layers (3, 4),
c) the layers are joined together in each case in a boundary zone (5) by a calcium silicate hydrate phase interpenetration bond and a mechanical aerated concrete material interlock joint,
d) the mechanical material interlock results from aerated concrete material of the outer layers (3, 4) engaging in macropores of the boundary zones (5) of the inner layer (2),
e) the outer layers (3, 4) are produced with apparent densities of between 250 and 800 kg/m³,
and
- wherein at least two set aerated concrete slabs made from an aerated concrete material with apparent densities of between 70 and 150 kg/m³ for the inner layer (2) of the construction slab (1) are erected on edge in a cuboid casting mould (10) which is open at the top and has a base (11), two side walls (12, 13) and two end walls (14, 15), the slabs being spaced apart next to one another and at a distance in each case from the neighbouring side wall (12, 13) of the casting mould (10) on the base (11) of the casting mould (10), thereafter aerated concrete casting mix (6) for the outer layers (3, 4) is poured into the space (16) between the aerated concrete slabs and in each case into the space between the aerated concrete slab and the side wall (12, 13) of the casting mould (10), then after "fermentation" and initial rigidification of the casting mix (6) and after removal of shuttering the moulded aerated concrete body is transferred into an autoclave and the casting mix (6) is hardened, and
- wherein after the removal of shuttering from the moulded aerated concrete body the fresh, initially rigidified aerated concrete material of the outer layers (3, 4) is cut lengthwise with a conventionally used aerated concrete saw with wires or cutting bars in the space (16) between the aerated concrete slabs of the inner layers (2), and
- wherein after the removal of shuttering with the same aerated concrete saw with stationary or moving wires or knife bars at the same time both fresh, initially rigidified aerated concrete mix of the outer layers (3, 4) and also the relatively brittle, hardened and autoclaved aerated concrete mix of the inner layer (2) or layers (2) are cut transversely,
- wherein holding means which prevent floating of the aerated concrete slabs of the inner layer (2) which are set on edge upon casting fresh aerated concrete mix are used for fixing the aerated concrete slabs of the inner layer (2), wherein the holding means are mounted on the upper edge of the casting mould (10) and are equipped with piercing lances (19) for piercing into the aerated concrete slabs, wherein the piercing lances (19) extend from the holding means towards the base (11) and wherein the holding means have a rectangular frame (21) which can be removed from the casting mould (10), in which frame holding rails (18) extending parallel to the side walls (12, 13) for holding the aerated concrete slabs are provided, which rails are arranged on supporting rails (20) which extend transversely to the holding rails (18) and are fastened to the frame (21), wherein the piercing lances (19) are provided on the holding rails (18).

2. A method according to Claim 1,
**characterised in that**
the outer layers (3, 4) are produced with apparent densities of between 350 and 650 kg/m³ and/or thermal conductivities of between 0.07 and 0.15 W/mK, in particular of between 0.09 and 0.13 W/mK, and/or the inner layer (2) is used with apparent densities of between 100 and 120 kg/m³, and/or thermal conductivities of between 0.038 and 0.065 W/mK, in particular between 0.04 and 0.05 W/mK.

3. A method according to Claim 1 and/or 2,
**characterised in that**
the outer layers (3, 4) are produced with compressive strengths of between 1.6 and 8 N/mm², in particular of between 2 and 6 N/mm², and/or the inner layer (2) is produced with a compressive strength of between 0.2 and 1.0 N/mm², in particular of between 0.3 and 0.4 N/mm².

4. A method according to one or more of Claims 1 to 3,
**characterised in that**
at least one of the outer layers (3, 4) is reinforced, in particular reinforced for transport, in particular in the case of large-format construction slabs.

5. A method according to one or more of Claims 1 to 4,
**characterised in that**
the construction slab (1) is produced with a thermal conductivity of between 0.05 and 0.12 W/mK, in particular of between 0.06 and 0.08 W/mK.

6. A method according to one or more of Claims 1 to 5,
**characterised in that**
the construction slab (1) is produced with the following dimensions:
length: between 30 and 800, in particular between 50 and 63 cm
thickness: between 25 and 75, in particular between 30 and 48 cm
height: between 15 and 80, in particular between 20 and 25 cm.

7. A cuboid casting mould (10), open at the top, for carrying out the method according to one of Claims 1 to 6,
having a base (11), two side walls (12, 13) and two end walls (14, 15), and also holding means designed for holding aerated concrete slabs standing on edge on the base (11), wherein the holding means are mounted on the upper edge of the casting mould (10) and are equipped with piercing lances (19) for piercing into the aerated concrete slabs, wherein the piercing lances (19) extend from the holding means towards the base (11) and wherein the holding means have a rectangular frame (21) which can be removed from the casting mould (10), in which holding rails (18) extending parallel to the side walls (12, 13) for holding the aerated concrete slabs are provided, which rails are arranged on supporting rails (20) which extend transversely to the holding rails (18) and are fastened to the frame (21), wherein the piercing lances (19) are provided on the holding rails (18).

8. A casting mould according to Claim 7,
**characterised in that**
the holding rails (18) are arranged laterally displaceably on the supporting rails (20).

## Revendications

1. Procédé permettant de fabriquer un panneau de construction (1) minéral, monolithique, multicouche, à isolation thermique, composé de béton cellulaire, présentant au moins trois couches, dont deux couches extérieures (3, 4) sont constituées de béton cellulaire et dont la couche intérieure (2) est constituée d'un matériau pour l'isolation thermique, dans lequel
a) la couche intérieure (2) est également constituée de béton cellulaire,
b) la densité apparente de la couche de béton cellulaire intérieure (2) est inférieure à la densité apparente des couches de béton cellulaire extérieures (3, 4),
c) les couches sont reliées respectivement dans une zone limite (5) les unes aux autres par une liaison par ancrage de phases d'hydrate de silicate de calcium et par une liaison mécanique par ancrage de matériau de béton cellulaire, et
d) l'ancrage de matériau mécanique résulte d'un matériau de béton cellulaire, venant en prise avec des macropores des zones limites (5) de la couche intérieure (2), des couches extérieures (3, 4),
e) les couches extérieures (3, 4) sont fabriquées avec des densités apparentes comprises entre 250 et 800 kg/m³,
et
- dans lequel au moins deux panneaux de béton cellulaire durcis composés d'un matériau de béton cellulaire présentant des densités apparentes comprises entre 70 et 150 kg/m³ pour la couche intérieure (2) du panneau de construction (1) sont placés sur chant dans un moule (10) de forme carrée, ouvert en haut, présentant un fond (11), deux parois latérales (12, 13) et deux parois frontales (14, 15), de manière espacée l'un de l'autre et à distance respectivement de la paroi latérale (12, 13) adjacente du moule (10), sur le fond (11) du moule (10), une masse de coulée de béton cellulaire (6) pour les couches extérieures (3, 4) est ensuite transvasée dans l'espace intermédiaire (16) des panneaux de béton cellulaire et respectivement dans l'espace intermédiaire entre le panneau de béton cellulaire et la paroi latérale (12, 13) du moule (10), immédiatement après la cuisson et la prise de la masse coulée (6) et après un décoffrage, le corps moulé de béton cellulaire est amené dans un autoclave et la masse coulée (6) est durcie, et
- dans lequel après le décoffrage du corps moulé de béton cellulaire, le matériau de béton cellulaire frais, ayant pris des couches extérieures (3, 4) est découpé en longueur avec une scie pour béton cellulaire couramment utilisée avec des fils métalliques ou des barres de coupe dans l'espace intermédiaire (16) entre les panneaux de béton cellulaire des couches intérieures (2), et
- dans lequel après le décoffrage aussi bien la masse de béton cellulaire fraîche ayant pris des couches extérieures (3, 4), que la masse de béton cellulaire relativement friable, durcie ou placée en autoclave de la couche intérieure (2) ou des couches intérieures (2) sont découpées de manière transversale de manière simultanée avec la même scie pour béton cellulaire avec des fils métalliques ou des lames de coupe fixes ou en mouvement,
- dans lequel des moyens de maintien empêchant un flottement des panneaux de béton cellulaire, placés sur chant, de la couche intérieure (2) lors de la coulée de la masse fraîche de béton cellulaire sont utilisés en vue de la fixation des panneaux de béton cellulaire de la couche intérieure (2), dans lequel les moyens de maintien sont montés sur le bord supérieur du moule (10) et sont équipés de lances de perçage (19) destinées à être piquées dans les panneaux de béton cellulaire, dans lequel les lances de perçage (19) s'étendent depuis les moyens de maintien en direction du fond (11) et dans lequel les moyens de maintien présentent un cadre (21) quadrangulaire pouvant être retiré du moule (10), dans lequel sont prévus des rails de maintien (18) s'étendant de manière parallèle par rapport aux parois latérales (12, 13), servant à maintenir des panneaux de béton cellulaire, lesquels sont disposés au niveau de rails de support (20) s'étendant de manière transversale par rapport aux rails de maintien (18), fixés au niveau du cadre (21), dans lequel les lances de perçage (19) sont prévues au niveau des rails de maintien (18).

2. Procédé selon la revendication 1,
**caractérisé en ce que**
les couches extérieures (3, 4) sont fabriquées avec des densités apparentes comprises entre 350 et 650 kg/m³ et/ou des conductivités thermiques comprises entre 0,07 et 0,15 W/mK, en particulier entre 0,09 et 0,13 W/mK, et/ou **en ce que** la couche intérieure (2) présentant des densités apparentes comprises entre 100 et 120 kg/m³, et/ou des conductivités thermiques comprises entre 0,038 et 0,065 W/mK, en particulier comprises entre 0,04 et 0,05 W/mK, est utilisée.

3. Procédé selon la revendication 1 et/ou 2,
**caractérisé en ce que**
les couches extérieures (3, 4) sont fabriquées avec des résistances à la pression comprises entre 1,6 et 8 N/mm², en particulier comprises entre 2 et 6 N/mm², et/ou **en ce que** la couche intérieure (2) est fabriquée avec une résistance à la pression comprise entre 0,2 et 1,0 N/mm², en particulier comprise entre 0,3 et 0,4 N/mm².

4. Procédé selon l'une quelconque ou plusieurs des revendications 1 à 3,
**caractérisé en ce que**
au moins une des couches extérieures (3, 4) est armée, en particulier est armée pour le transport, en particulier pour des panneaux de construction de grand format.

5. Procédé selon l'une quelconque ou plusieurs des revendications 1 à 4,
**caractérisé en ce que**
le panneau de construction (1) est fabriqué avec une conductivité thermique comprise entre 0,05 et 0,12 W/mK, en particulier comprise entre 0,06 et 0,08 W/mK.

6. Procédé selon l'une quelconque ou plusieurs des revendications 1 à 5,
**caractérisé en ce que**
le panneau de construction (1) est fabriqué avec des dimensions qui suivent :
longueur : comprise entre 30 et 800, en particulier entre 50 et 63 cm,
épaisseur : comprise entre 25 et 75, en particulier entre 30 et 48 cm,
hauteur : comprise entre 15 et 80, en particulier entre 20 et 25 cm.

7. Moule (10) de forme carrée, ouvert en haut, servant à la mise en oeuvre du procédé selon l'une quelconque des revendications 1 à 6,
présentant un fond (11), deux parois latérales (12, 13) et deux parois frontales (14, 15) ainsi que des moyens de maintien réalisés afin de maintenir des panneaux de béton cellulaire placés sur chant sur le fond (11), dans lequel les moyens de maintien sont montés sur le bord supérieur du moule (10) et sont équipés de lances de perçage (19) destinées à être piquées dans les panneaux de béton cellulaire, dans lequel les lances de perçage (19) s'étendent depuis les moyens de maintien en direction du fond (11) et dans lequel les moyens de maintien présentent un cadre (21) quadrangulaire pouvant être retiré du moule (10), dans lequel sont prévus des rails de maintien (18) s'étendant de manière parallèle par rapport aux parois latérales (12, 13), servant à maintenir les panneaux de béton cellulaire, qui sont disposés au niveau de rails de support (20) s'étendant de manière transversale par rapport aux rails de maintien (18), fixés au niveau du cadre (21), dans lequel les lances de perçage (19) sont prévues au niveau des rails de maintien (18).

8. Moule selon la revendication 7,
**caractérisé en ce que**
les rails de maintien (18) sont disposés, de manière à pouvoir être décalés sur le côté, au niveau des rails de support (20).
